# EUROPÄISCHE PATENTSCHRIFT

(11) **EP 0 766 748 B1**
(45) Veröffentlichungstag und Bekanntmachung des Hinweises auf die Patenterteilung: **15.12.1999**
(21) Anmeldenummer: 95920705.1
(22) Anmeldetag: 20.06.1995
(51) Int. Cl.: C21B 13/02, C21B 13/00

(54) **VERFAHREN ZUR DIREKTREDUKTION VON EISENOXIDHÄLTIGEM MATERIAL**
DIRECT REDUCTION PROCESS FOR IRON OXIDE-CONTAINING MATERIALS
PROCEDE DE REDUCTION DIRECTE DE MATERIAUX CONTENANT DE L'OXYDE DE FER

(30) Priorität: 23.06.1994 AT 125094
(43) Veröffentlichungstag der Anmeldung: 09.04.1997
(73) Patentinhaber: VOEST-ALPINE INDUSTRIEANLAGENBAU GMBH, 4020 Linz (AT); Brifer International Ltd., Bridgetown (BB)
(72) Erfinder: KERN, Gerald, A-1160 Wien (AT); KEPPLINGER, Werner, Leopold, A-4060 Leonding (AT); SCHENK, Johannes, A-4040 Linz (AT); WHIPP, Roy, Hubert, Jr., Miami, FL 33176 (US)
(74) Vertreter: Kopecky, Helmut, Dipl.-Ing. Kopecky & Schwarz Patentanwälte
(86) Internationale Anmeldenummer: AT9500123
(87) Internationale Veröffentlichungsnummer: WO9600304

(56) Entgegenhaltungen:
- EP-A- 0 179 752
- DE-A- 2 103 731
- GB-A- 799 551
- US-A- 4 224 057
- US-A- 4 376 648

## Beschreibung

Die Erfindung betrifft ein Verfahren zur Direktreduktion von eisenoxidhältigem Material in mindestens einer Wirbelschicht, wobei Synthesegas mit bei der Direktreduktion des eisenoxidhältigen Materials entstehendem Topgas vermischt und als CO- und H₂-hältiges Reduktionsgas zur Direktreduktion des eisenoxidhältigen Materials verwendet wird.

Ein Verfahren dieser Art ist beispielsweise aus der US-A - 2,752,234, der US-A - 5,082,251 und der EP-A - 0 571 358 bekannt.

Aus der EP-A - 0 571 358 ist es bekannt, die Reduktion von Feinerz nicht ausschließlich über die stark endotherme Reaktion mit H₂ gemäß

*Fe*₂*O*₃ + 3*H*₂ = 2*Fe* + 3*H*₂*O* - Δ*H*,

sondern zusätzlich über die Reaktion mit CO, gemäß

*Fe*₂*O*₃ + 3*CO* = 2*Fe* + 3*CO*₂ + Δ*H*,

die exotherm ist, durchzuführen. Hierdurch gelingt es, die Betriebskosten, insbesondere die Energiekosten, beträchtlich zu senken.

Metallische Anlagenteile, die mit einem CO-hältigen Reduktionsgas in Kontakt gelangen, sind jedoch einer hohen Korrosionsbelastung ausgesetzt: Es kommt u.a. zu einer Metallzersetzung, die in der Fachliteratur als "metal dusting" bezeichnet ist. "Metal dusting" tritt verstärkt bei höheren Temperaturen auf, wodurch insbesondere Anlagenteile, die mit heißem CO-hältigem Reduktionsgas in Kontakt gelangen, gefährdet sind. Dies sind bei einer Anlage zur Durchführung des eingangs erwähnten Verfahrens die der Direktreduktion dienenden Reaktoren und der das Reduktionsgas auf Reduktionstemperatur erhitzende Gaserhitzer.

Aus US-A-4 376 648 ist ein Direktreduktionsverfahren der eingangs erwähnten Art bekannt, bei dem H₂S dem dem Reaktor zuzuführenden Reduktionsgas von außen zugesetzt wird, im die H₂S-Konzentration auf 10-100 ppm einzustellen und damit dem für den Durchgang des Reduktionsgases durch den Reaktor ungünstigen Zerfall von CO zu C und CO₂ entgegenzuwirken.

Zur Vermeidung bzw. zur Verminderung von "metal dusting" ist es intern bekannt, im Reduktionsgas für einen Schwefelgehalt zu sorgen, was man durch Eindüsen von H₂S-Gas bewerkstelligt hat. Eine solche Zumischung von H₂S-Gas ist nicht nur technisch aufwendig, sondern auch sehr teuer und zudem verfahrensmäßig kompliziert, d.h. es ist schwierig, hierbei den H₂S-Gehalt im Reduktionsgas gleichmäßig auf einen bestimmten Wert in Abhängigkeit der chemischen Zusammensetzung des Reduktionsgases einzustellen.

Die Erfindung bezweckt die Vermeidung dieser Nachteile und Schwierigkeiten und stellt sich die Aufgabe, ein Verfahren der eingangs beschriebenen Art und eine Anlage zur Durchführung des Verfahrens zu schaffen, welche in einfacher Art und Weise das Auftreten von "metal dusting" trotz eines erhöhten CO-Gehaltes des Reduktionsgases minimieren oder verhindern, insbesondere in einer verfahrenstechnisch bzw. konstruktiv einfachen und kostengünstigen Art, so daß die Lebensdauer metallischer Anlagenteile beträchtlich erhöht wird.

Diese Aufgabe wird bei einem Verfahren der eingangs beschriebenen Art dadurch gelöst, daß das Reduktionsgas auf ein vorbestimmtes CO/CO₂-Verhältnis von 1 bis 3 eingestellt wird und mit dem Topgas ein H₂S-Gehalt im Reduktionsgas von 20 bis 40 ppmV, vorzugsweise etwa 25 ppmV, eingestellt wird.

Durch die Einstellung eines CO/CO₂-Verhältnisses zwischen 1 und 3 gelingt es, die Reaktionsaktivität des im Reduktionsgas enthaltenen CO gegenüber Metall, insbesondere Stahl, und damit die Reparaturanfälligkeit der Anlage zur Direktreduktion entscheidend zu senken, ohne auf höhere CO-Gehalte, die die verfahrenstechnisch günstige exotherme Reaktion mit Fe₂O₃ ermöglichen, verzichten zu müssen. Durch Einstellung des H₂S-Gehalts mit dem Topgas erspart man sich das technisch aufwendige Eindüsen von H₂S in das Reduktionsgas.

Aus der DE-A - 2 103 731 ist ein Verfahren zur Direktreduktion von stückigen oder agglomerierten eisenoxidhältigen Materialien im Schachtofen mittels wasserstoffhältiger Reduktionsgase unter erhöhtem Druck bekannt, wobei die Reduktion mit Wasserstoff als Reduktionsgas, dessen Verunreinigungen maximal 5 Vol.% CO, 5 Vol.% CO₂, 5 Vol.% CH₄ und 2 Vol.% Wasserdampf betragen. Das wasserstoffhältige Reduktionsgas, das etwa 90 Vol.% H₂ enthält, kann hierbei 1,9 Vol.% CO₂ und 4,1 Vol.% CO enthalten. CO und CO₂ sind hierbei lediglich Verunreinigungen.

Nach einer bevorzugten Ausführungsform des erfindungsgemäßen Verfahrens erfolgt die Einstellung des CO/CO₂-Verhältnisses durch eine Einstellung der Fahrweise eines der Herstellung des Synthesegases aus Erdgas durch Reformieren dienenden Reformers, indem das Dampf-Erdgas-Verhältnis bei der Speisung des Reformers variiert wird.

Vorzugsweise wird das Dampf-Erdgas-Verhältnis im Bereich von 3 bis 4,5, insbesondere auf einen Wert von etwa 3,5, eingestellt.

Nach einer weiteren bevorzugten Ausführungsform des erfindungsgemäßen Verfahrens wird das CO/CO₂-Verhältnis eingestellt, indem ein Teilvolumen reformierten Gases, das in einem Reformer aus Dampf und Erdgas hergestellt und anschließend einer CO-Konvertierung zur Erhöhung des H₂-Gehaltes zugeführt wird, direkt, d.h. ohne der CO-Konvertierung unterzogen zu werden, dem Topgas zugemischt wird, wobei die Menge des direkt zugemischten reformierten Gases variabel ist.

Eine weitere bevorzugte Verfahrensvariante beinhaltet, daß das CO/CO₂-Verhältnis eingestellt wird, indem das Synthesegas und gegebenenfalls auch das Topgas vor der Verwendung als Reduktionsgas einer CO₂-Wäsche unterzogen werden und zumindest ein Teilvolumen des Synthesegases unter Umgehung der CO₂-Wäsche direkt dem Reduktionsgas zugemischt wird.

Zweckmäßig kann weiters das CO/CO₂-Verhältnis eingestellt werden, indem das Synthesegas und gegebenenfalls auch das Topgas einer CO₂-Wäsche unterzogen werden, wobei zumindest ein Teilvolumen des Topgases unter Umgehung der CO₂-Wäsche dem Reduktionsgas direkt zugemischt wird.

Gemäß einer anderen bevorzugten Verfahrensvariante wird das CO/CO₂-Verhältnis eingestellt, indem das Synthesegas und gegebenenfalls auch das Topgas vor der Verwendung als Reduktionsgas einer CO₂-Wäsche unterzogen werden, wobei der Auswaschungsgrad der CO₂-Wäsche variiert wird, u.zw. dahingehend, daß ein Teil des CO₂ im gewaschenen Gas verbleibt.

Eine bevorzugte Ausführungsform des erfindungsgemäßen Verfahrens ist dadurch gekennzeichnet, daß der H₂S-Gehalt im Reduktionsgas eingestellt wird, indem zumindest ein Teil eines im eisenoxidhältigen Material enthaltenen Schwefels in Form von bei einer Erhitzung bzw. bei der Direktreduktion anfallendem H₂S mit dem Topgas dem Reduktionsgas zugeführt wird.

Hierbei wird zweckmäßig, falls das eisenoxidhältige Material nicht genug schwefelhältig ist, ein schwefelhältiges Material, wie Fe-Pyrit, zugesetzt.

Als Synthesegas kann (können) beim erfindungsgemäßen Verfahren eines oder mehrere der nachstehenden Gase eingesetzt werden:
- LD-Abgas
- EAF-Abgas
- Gichtgas aus Hochofenanlagen
- Gichtgas aus Corexanlagen
- Kohlegas
- Corexgas aus dem Corexvergaser
- Chemiegase.

Vorzugsweise wird als Synthesegas reformiertes Erdgas eingesetzt.

Zweckmäßig wird ein CO/CO₂-Verhältnis zwischen 1,5 bis 2,0 eingestellt.

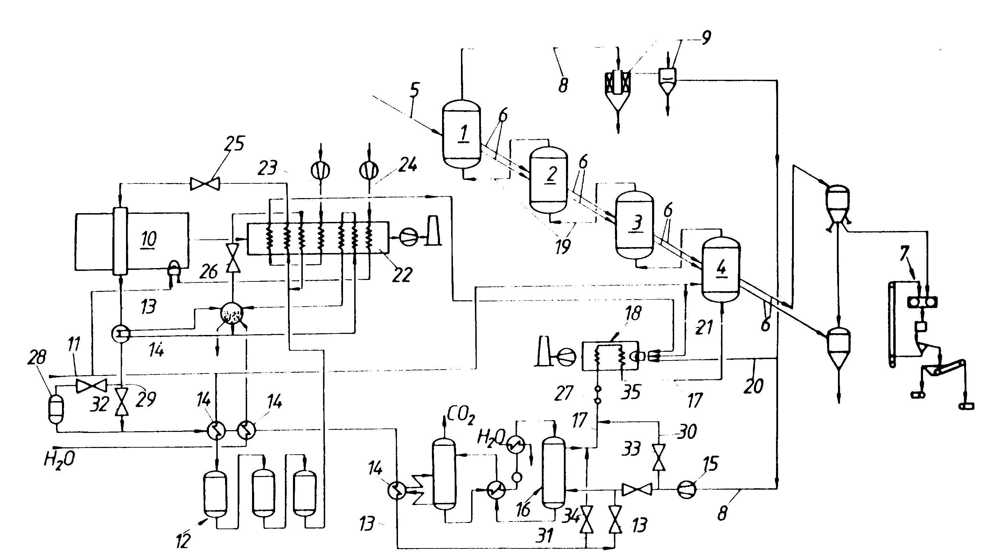

Die Erfindung ist nachfolgend anhand der Zeichnung, die ein Verfahrensschema nach einer bevorzugten Ausführungsform zeigt, näher erläutert.

Eine Anlage zur Durchführung des erfindungsgemäßen Verfahrens weist vier in Serie hintereinander geschaltete Wirbelschichtreaktoren 1 bis 4 auf, wobei eisenoxidhältiges Material, wie Feinerz, über eine Erzzuleitung 5 dem ersten Wirbelschichtreaktor 1, in dem die Aufheizung aufReduktionstemperatur (bzw. eine Vorreduktion) stattfindet, zugeleitet und anschließend von Wirbelschichtreaktor zu Wirbelschichtreaktor über Förderleitungen 6 geleitet wird. Das fertig reduzierte Material (Eisenschwamm) wird in einer Brikettieranlage 7 heißbrikettiert. Erforderlichenfalls wird das reduzierte Eisen während der Brikettierung vor einer Reoxidation durch ein nicht dargestelltes Inertgas-System geschützt.

Vor Einleitung des Feinerzes in den ersten Wirbelschichtreaktor 1 wird es einer Erzvorbereitung, wie einer Trocknung und einem Sieben, unterzogen, die nicht näher dargestellt ist.

Reduktionsgas wird im Gegenstrom zum Erzdurchfluß von Wirbelschichtreaktor 4 zu Wirbelschichtreaktor 3 bis 1 geführt und als Topgas über eine Topgas-Ableitung 8 aus dem in Gasströmungsrichtung letzten Wirbelschichtreaktor 1 abgeleitet und in einem Naßwäscher 9 gekühlt und gewaschen.

Die Herstellung des Reduktionsgases erfolgt durch Reformieren von über die Leitung 11 zugeführtem und in einer Entschwefelungsanlage 12 entschwefeltem Erdgas in einem Reformer 10. Das aus Erdgas und Dampf gebildete, den Reformer 10 verlassende Gas besteht im wesentlichen aus H₂, CO, CH₄, H₂O und CO₂. Dieses reformierte Erdgas wird über die Reformgasleitung 13 mehreren Wärmetauschern 14 zugeleitet, in denen es auf 80 bis 150°C abgekühlt wird, wodurch Wasser aus dem Gas auskondensiert wird.

Die Reformgasleitung 13 mündet in die Topgas-Ableitung 8, nachdem das Topgas mittels eines Kompressors 15 verdichtet wurde. Das sich so bildende Mischgas wird durch einen CO₂-Wäscher 16 hindurchgeschickt und von CO₂ sowie dabei auch von H₂S befreit. Es steht nunmehr als Reduktionsgas zur Verfügung. Dieses Reduktionsgas wird über eine Reduktionsgaszuleitung 17 in einem dem CO₂-Wäscher 16 nachgeordneten Gaserhitzer 18 auf eine Reduktionsgastemperatur von etwa 800°C erhitzt und dem in Gasdurchflußrichtung ersten Wirbelschichtreaktor 4 zugeführt, wo es mit den Feinerzen zur Erzeugung von direktreduziertem Eisen reagiert. Die Wirbelschichtreaktoren 4 bis 1 sind in Serie geschaltet; das Reduktionsgas gelangt über die Verbindungsleitungen 19 von Wirbelschichtreaktor zu Wirbelschichtreaktor.

Ein Teil des Topgases wird aus dem Gas-Kreislauf 8, 17, 19 ausgeschleust, um eine Anreicherung von Inertgasen, wie N₂, zu vermeiden. Das ausgeschleuste Topgas wird über eine Zweigleitung 20 dem Gaserhitzer 18 zur Erwärmung des Reduktionsgases zugeführt und dort verbrannt. Eventuell fehlende Energie wird durch Erdgas, welches über die Zuleitung 21 zugeführt wird, ergänzt.

Die fühlbare Wärme des aus dem Reformer 10 austretenden reformierten Erdgases sowie der Reformerrauchgase wird in einem Rekuperator 22 genutzt, um das Erdgas nach Durchlauf durch die Entschwefelungsanlage 12 vorzuwärmen, den für die Reformierung benötigten Dampf zu erzeugen sowie die dem Gaserhitzer 18 über die Leitung 23 zugeführte Verbrennungsluft sowie gegebenenfalls auch das Reduktionsgas vorzuwärmen. Die dem Reformer 10 über die Leitung 24 zugeführte Verbrennungsluft wird ebenfalls vorgewärmt.

Zur Einstellung eines bestimmten CO/CO₂-Verhältnisses, das zur Vermeidung bzw. wesentlichen Verminderung von "metal dusting" in einem Bereich zwischen 1 und 3, vorzugsweise in einem Bereich zwischen 1,5 und 2,0, liegen soll, wird erfindungsgemäß nach einer ersten Variante das Dampf/Erdgas-Verhältnis der Speisung des Reformers 10 variiert, wobei das Dampf/Erdgas-Verhältnis vorzugsweise auf einen in einem Bereich zwischen 3 bis 4,5 liegenden Wert, insbesondere auf einen Wert von 3,5 eingestellt wird. Die hierzu dienenden Stellventile bzw. Regelventile sind mit 25 und 26 bezeichnet und von einer das CO/CO₂-Verhältnis des Reduktionsgases messenden Meßstation 27 steuer- bzw. regelbar.

Wie aus der Zeichnung ersichtlich ist, wird das reformierte Gas, bevor es der CO₂-Wäsche bei 16 zugeleitet wird, zur Erhöhung des H₂-Gehaltes einem CO-Konverter 28 zumindest mit einem Teilvolumen zugeführt. Das restliche Teilvolumen des reformierten Gases wird direkt dem Topgas zugemischt, indem es über eine Bypass-Leitung 29 den CO-Konverter 28 überbrückt. Hierdurch gelingt es, den CO-Gehalt auf einen gewünschten Wert einzustellen, so daß auch durch diese Verfahrensmaßnahme das gewünschte CO/CO₂-Verhältnis zur Vermeidung von "metal dusting" eingestellt werden kann.

Die Einstellung eines bestimmten CO/CO₂-Verhältnisses kann weiters dadurch erfolgen, daß ein Teilvolumen des Topgases über eine den CO₂-Wäscher 16 umgehende Bypass-Leitung 30 direkt in die Reduktionsgaszuleitung 17 eingeleitet wird. Weiters kann auch ein Teilvolumen des reformierten Gases über eine den CO₂-Wäscher 16 überbrückende Bypass-Leitung 31 der Reduktionsgaszuleitung 17 direkt zugeführt werden, welche Bypass-Leitung 31 dann von der Reformgasleitung 13 ausgeht.

Sämtliche Bypass-Leitungen 29, 30, 31 sind mit Stell- bzw. Regelventilen 32, 33, 34 ausgestattet, die aufgrund einer Messung des CO/CO₂-Verhältnisses des Reduktionsgases mittels der Meßstation 27 eingestellt bzw. geregelt werden.

Das gewünschte CO/CO₂-Verhältnis im Reduktionsgas kann auch dadurch eingestellt werden, daß zwar das gesamte Topgas und das gesamte reformierte Gas durch den CO₂-Wäscher 16 hindurchgeleitet werden, dieser jedoch auf einen Auswaschungsgrad eingestellt wird, bei dem ein Teil des CO₂ (und damit auch ein Teil des H₂S) im aus dem CO₂-Wäscher 16 austretenden Gas verbleibt. Dies hat den Vorteil, daß keine Nebeneinrichtungen, wie Bypass-Leitungen 29, 30, 31 mit Ventilen 32, 33, 34, vorgesehen werden müssen, bedingt allerdings, daß die gesamte Gasmenge, also das gesamte Topgas und das gesamte reformierte Gas, durch den CO₂-Wäscher 16 hindurchgeleitet werden müssen, so daß dieser auf diese Menge bemessen sein muß.

Das den Wirbelschichtreaktor 1 verlassende Topgas weist - in Abhängigkeit vom Schwefelgehalt des Erzes - einen H₂S-Gehalt von 40 bis 140 ppmV auf. Das H₂S-Gas bildet sich während der Erhitzung des Feinerzes auf Reduktionstemperatur bzw. während der Vorreduktion des Feinerzes.

Da ein erhöhter H₂S-Gehalt im Reduktionsgas ebenfalls die Bildung von "metal dusting" vermindert, ist es besonders vorteilhaft, wenn H₂S nicht mehr zur Gänze mittels des CO₂-Wäschers aus dem Topgas ausgewaschen wird, sondern dafür Sorge getragen wird, daß der für das Reduktionsgas gewünschte Prozentsatz von H₂S aus dem Topgas dem Reduktionsgas zugeführt wird. Dies kann im vorliegenden Fall mittels der den CO₂-Wäscher 16 umgehenden Bypass-Leitung 30 verwirklicht werden, die über das Stell- bzw. Regelventil 33 von der Topgasableitung 8 ausgeht und in die Reduktionsgaszuleitung 17 mündet. Das Regelventil 33 ist derart einstellbar, daß ein H₂S-Gehalt in der Größe von 20 bis 40 ppmV, vorzugsweise in der Größe von etwa 25 ppmV, im Reduktionsgas vorhanden ist. Das Regelventil wird in diesem Fall vorzugsweise über eine H₂S-Meßeinrichtung 35 aktiviert.

Die oben beschriebenen Maßnahmen zur Einstellung des gewünschten CO/CO₂-Verhältnisses im Reduktionsgas können einzeln oder auch zu mehreren sowie auch alle gemeinsam ergriffen werden, so daß die für die jeweiligen Betriebsverhältnisse und in Abhängigkeit der Zusammensetzung des Erzes etc. günstigste Verfahrensvariante gewählt werden kann.

Anhand nachstehenden Beispieles ist die Einstellung eines CO/CO₂-Verhältnisses auf etwa 1,7 und die Einstellung des H₂S-Gehaltes auf 25 ppmV erläutert:

In einer gemäß der Zeichnung ausgestalteten Anlage zur Direktreduktion von Feinerz, die auf eine Erzeugung von 70 t/h von Eisenschwamm ausgelegt ist, werden 100 t/h getrocknetes Feinerz eingebracht. Die Analyse des Feinerzes ist folgende:

| | |
|---|---|
| Hämatit | 94,2 % |
| Gangart | 2,2 % |
| Schwefel | 0,02 % |

Von dem bei der Direktreduktion entstehenden Topgas werden 78.000 Nm³/h mit 48.000 Nm³/h reformiertem kaltem Erdgas gemischt und über den CO₂-Wäscher 16 geleitet, in dem das gemischte Gas von CO₂ und vom größten Anteil des Schwefels befreit wird.

Das reformierte Erdgas und das Topgas weisen die in der nachstehenden Tabelle angegebene chemische Zusammensetzung auf:

| | Reformiertes Erdgas | Topgas |
|---|---|---|
| CH₄ | 2,80 | 30,60 |
| CO | 4.80 | 5,80 |
| CO₂ | 14,50 | 5,30 |
| H₂ | 64,40 | 53,00 |
| H₂O | 13,50 | 0,70 |
| N₂ | 0,0 | 4,60 |
| H₂S | 0,0 | 60,0 ppmV |

Das aus dem CO₂-Wäscher 16 austretende Gasgemisch ist wie folgt zusammengesetzt:

| | |
|---|---|
| CH₄ | 22,80 |
| CO | 6,15 |
| CO₂ | 0,80 |
| H₂ | 64,90 |
| H₂O | 2,10 |
| N₂ | 3,25 |
| H₂S | 2ppmV |

Dieses Gasgemisch wird mit 78.000 Nm³/h des Topgases, das nicht durch den CO₂-Wäscher 16 hindurchgeleitet wurde, sondern über die Bypass-Leitung 30 in die Reduktionsgaszuleitung 17 zugeleitet wird, gemischt. Durch dieses Mischen wird das dem Gaserhitzer 18 und nachfolgend den Wirbelschichtreaktoren 1 bis 4 zugeführte Reduktionsgas gebildet, das folgende chemische Zusammensetzung aufweist:

| Reduktionsgas | |
|---|---|
| CH₄ | 24,5 |
| CO | 6.0 |
| CO₂ | 3,6 |
| H₂ | 60,9 |
| H₂O | 1,5 |
| N₂ | 3,5 |
| H₂S | 25 ppmV |

Der Metallisierungsgrad des Eisenschwammes beträgt 92 %.

Die Erfindung beschränkt sich nicht auf die oben beschriebenen Beispiele, sondern ist auch für andere Direktreduktionsverfahren verwendbar. Anstelle des reformierten Erdgases können auch andere in der Hauptsache CO und H₂ enthaltende reduzierende Gase, wie
- LD-Abgas
- EAF-Abgas
- Gichtgas aus Hochofenanlagen
- Gichtgas aus Corexanlagen
- Kohlegas
- Corexgas aus dem Corexvergaser
- Chemiegase.
zur Anwendung gelangen.

## Patentansprüche

1. Verfahren zur Direktreduktion von eisenoxidhältigem Material in mindestens einer Wirbelschicht unter Vermeidung von "metal dusting", wobei Synthesegas mit bei der Direktreduktion des eisenoxidhältigen Materials entstehendem Topgas vermischt und als CO- und H₂-hältiges Reduktionsgas zur Direktreduktion des eisenoxidhältigen Materials verwendet wird, und wobei das Reduktionsgas auf ein vorbestimmtes CO/CO₂-Verhältnis von 1 bis 3 eingestellt wird und mit dem Topgas ein H₂S-Gehalt im Reduktionsgas von 20 bis 40 ppmV, vorzugsweise etwa 25 ppmV, eingestellt wird.

2. Verfahren nach Anspruch 1, dadurch gekennzeichnet, daß die Einstellung des CO/CO₂-Verhältnisses durch eine Einstellung der Fahrweise eines der Herstellung des Synthesegases aus Erdgas durch Reformieren dienenden Reformers (10) erfolgt, indem das Dampf-Erdgas-Verhältnis bei der Speisung des Reformers (10) variiert wird.

3. Verfahren nach Anspruch 2, dadurch gekennzeichnet, daß das Dampf-Erdgas-Verhältnis im Bereich von 3 bis 4,5, insbesondere auf einen Wert von etwa 3,5, eingestellt wird.

4. Verfahren nach einem der Ansprüche 1 bis 3, dadurch gekennzeichnet, daß das CO/CO₂-Verhältnis eingestellt wird, indem ein Teilvolumen reformierten Gases, das in einem Reformer (10) aus Dampf und Erdgas hergestellt und anschließend einer CO-Konvertierung zur Erhöhung des H₂-Gehaltes zugeführt wird, direkt, d.h. ohne der CO-Konvertierung unterzogen zu werden, dem Topgas zugemischt wird, wobei die Menge des direkt zugemischten reformierten Gases variabel ist.

5. Verfahren nach Anspruch 1, dadurch gekennzeichnet, daß das CO/CO₂-Verhältnis eingestellt wird, indem das Synthesegas und gegebenenfalls auch das Topgas vor der Verwendung als Reduktionsgas einer CO₂-Wäsche unterzogen werden und zumindest ein Teilvolumen des Synthesegases unter Umgehung der CO₂-Wäsche direkt dem Reduktionsgas zugemischt wird.

6. Verfahren nach Anspruch 1, dadurch gekennzeichnet, daß das CO/CO₂-Verhältnis eingestellt wird, indem das Synthesegas und gegebenenfalls auch das Topgas einer CO₂-Wäsche unterzogen werden, wobei zumindest ein Teilvolumen des Topgases unter Umgehung der CO₂-Wäsche dem Reduktionsgas direkt zugemischt wird.

7. Verfahren nach Anspruch 1, dadurch gekennzeichnet, daß das CO/CO₂-Verhältnis eingestellt wird, indem das Synthesegas und gegebenenfalls auch das Topgas vor der Verwendung als Reduktionsgas einer CO₂-Wäsche unterzogen werden, wobei der Auswaschungsgrad der CO₂-Wäsche variiert wird, u.zw. dahingehend, daß ein Teil des CO₂ im gewaschenen Gas verbleibt.

8. Verfahren nach einem der Ansprüche 1 bis 7, dadurch gekennzeichnet, daß der H₂S-Gehalt im Reduktionsgas eingestellt wird, indem zumindest ein Teil eines im eisenoxidhältigen Material enthaltenen Schwefels in Form von bei einer Erhitzung bzw. bei der Direktreduktion anfallendem H₂S mit dem Topgas dem Reduktionsgas zugeführt wird.

9. Verfahren nach einem der Ansprüche 1 bis 8, dadurch gekennzeichnet, daß dem eisenoxidhältigen Material schwefelhältiges Material, wie Fe-Pyrit, zugesetzt wird.

10. Verfahren nach Anspruch 1 oder einem der Ansprüche 5 bis 9, dadurch gekennzeichnet, daß als Synthesegas eines oder mehrere der nachstehenden Gase eingesetzt wird:
• LD-Abgas
• EAF-Abgas
• Gichtgas aus Hochofenanlagen
• Gichtgas aus Corexanlagen
• Kohlegas
• Corexgas aus dem Corexvergaser
• Chemiegase.

11. Verfahren nach Anspruch 1 oder einem der Ansprüche 5 bis 9, dadurch gekennzeichnet, daß als Synthesegas reformiertes Erdgas eingesetzt wird.

12. Verfahren nach einem der Ansprüche 1 bis 11, dadurch gekennzeichnet, daß ein CO/CO₂-Verhältnis zwischen 1,5 bis 2,0 eingestellt wird.

## Claims

1. A process for the direct reduction of iron-oxide-containing material in at least one fluidized bed while avoiding metal dusting, wherein synthesis gas is mixed with top gas forming in the direct reduction of the iron-oxide-containing material and is used as a CO- and H₂-containing reducing gas for the direct reduction of the iron-oxide-containing material and wherein the reducing gas is adjusted to a predetermined CO/CO₂ ratio of from 1 to 3 and an H₂S content of from 20 to 40 ppmV, preferably about 25 ppmV, is adjusted in the reducing gas by the top gas.

2. A process according to claim 1, characterized in that the adjustment of the CO/CO₂ ratio is effected by adjusting the operating characteristics of a reformer (10) which serves to produce synthesis gas from natural gas by reformation, by varying the vapor/natural-gas ratio during feeding of the reformer (10).

3. A process according to claim 2, characterized in that the vapor/natural-gas ratio is adjusted within a range of from 3 to 4.5, in particular to a value of about 3.5.

4. A process according to any one of claims 1 to 3, characterized in that the CO/CO₂ ratio is adjusted by admixing to the top gas directly, i.e., without subjecting it to CO conversion, a partial volume of reformed gas produced from vapor and natural gas in a reformer (10) and subsequently fed to CO conversion to increase its H₂ content, the amount of the directly admixed reformed gas being variable.

5. A process according to claim 1, characterized in that the CO/CO₂ ratio is adjusted by subjecting the synthesis gas and optionally also the top gas to CO₂ scrubbing prior to being used as a reducing gas and admixing at least a partial volume of the synthesis gas directly to the reducing gas while avoiding CO₂ scrubbing.

6. A process according to claim 1, characterized in that the CO/CO₂ ratio is adjusted by subjecting the synthesis gas and optionally also the top gas to CO₂ scrubbing, wherein at least a partial volume of the top gas is directly admixed to the reducing gas while avoiding CO₂ scrubbing.

7. A process according to claim 1, characterized in that the CO/CO₂ ratio is adjusted by subjecting the synthesis gas and optionally also the top gas to CO₂ scrubbing prior to being used as a reducing gas, wherein the scrubbing degree of CO₂ scrubbing is varied with a view to retaining a portion of CO₂ within the scrubbed gas.

8. A process according to any one of claims 1 to 7, characterized in that the H₂S content in the reducing gas is adjusted by supplying to the reducing gas along with the top gas at least a portion of the sulfur contained in the iron-oxide-containing material in the form of H₂S occurring in heating or in direct reduction, respectively.

9. A process according to any one of claims 1 to 8, characterized in that a sulfurous material, such as iron pyrite, is added to the iron-oxide-containing material.

10. A process according to claim 1 or any one of claims 5 to 9, characterized in that one or several of the following gases are used as said synthesis gas:
• LD offgas
• EAF offgas
• blast furnace gas from blast furnace plants
• blast furnace gas from Corex plants
• coal gas
• Corex gas from Corex gasifier
• chemical gases.

11. A process according to claim 1 or any one of claims 5 to 9, characterized in that reformed natural gas is used as said synthesis gas.

12. A process according to any one of claims 1 to 11, characterized in that a CO/CO₂ ratio of between 1.5 to 2.0 is adjusted.

## Revendications

1. Procédé de réduction directe de matériaux contenant de l'oxyde de fer dans au moins une couche turbulente en évitant le "metal dusting", dans lequel du gaz de synthèse est mélangé à un gaz par dessus produit lors de la réduction directe du matériau contenant de l'oxyde de fer et est utilisé comme gaz de réduction contenant du CO et du H₂ pour la réduction directe du matériau contenant de l'oxyde de fer, et dans lequel le gaz de réduction est amené à un rapport de CO/CO₂ prédéterminé allant de 1 à 3 et dans lequel est amenée une teneur en H₂S dans le gaz de réduction allant de 20 à 40 ppmV, de préférence environ 25 ppmV, avec le gaz par dessus.

2. Procédé selon la revendication 1, caractérisé en ce que le réglage du rapport CO/CO₂ se fait par une mise au point du comportement d'un reformeur (10) servant à la production du gaz de synthèse à partir de gaz naturel par reformage, tandis que le rapport de vapeur à gaz naturel est varié lors de l'alimentation du reformeur (10).

3. Procédé selon la revendication 2, caractérisé en ce que le rapport de vapeur à gaz naturel est amené dans la gamme allant de 3 à 4,5, en particulier à une valeur de approximativement 3,5.

4. Procédé selon l'une des revendications 1 à 3, caractérisé en ce que le rapport CO/CO₂ est mis au point, tandis qu'un volume partiel de gaz reformé, qui est produit dans un reformeur (10) à partir de vapeur et de gaz naturel et amené ensuite à une conversion CO pour l'augmentation de la teneur en H₂, est mélangé directement au gaz par dessus, c'est-à-dire sans être soumis à la conversion CO, la quantité de gaz reformé mélangée directement étant variable.

5. Procédé selon la revendication 1, caractérisé en ce que le rapport CO/CO₂ est mis au point, tandis que le gaz de synthèse et, le cas échéant, également le gaz par dessus sont soumis à un lavage au CO₂ avant l'utilisation comme gaz de réductlon et au moins un volume partiel du gaz de synthèse est mélangé directement au gaz de réduction tout en évitant le lavage au CO₂.

6. Procédé selon la revendication 1, caractérisé en ce que le rapport CO/CO₂ est mis au point, tandis que le gaz de synthèse et, le cas échéant, également le gaz par dessus sont soumis à un lavage au CO₂, dans lequel au moins un volume partiel du gaz par dessus est mélangé directement au gaz de réduction tout en évitant la lavage au CO₂.

7. Procédé selon la revendication 1, caractérisé en ce que le rapport CO/CO₂ est mis au point, tandis que le gaz de synthèse et, le cas échéant, également le gaz par dessus sont soumis à un lavage au CO₂ avant l'utilisation comme gaz de réduction, dans lequel le degré de lavage du lavage au CO₂ est varié, et cela en ce sens qu'une partie du CO₂ réside dans le gaz lavé.

8. Procédé selon l'une des revendications 1 à 7, caractérisé en ce que la teneur en H₂S dans le gaz de réduction est mise au point, tandis que au moins une partie du soufre présent dans le matériau contenant de l'oxyde de fer est amenée au gaz de réduction sous la forme de H₂S produit lors d'un réchauffement ou respectivement lors de la réduction directe avec le gaz par dessus.

9. Procédé selon l'une des revendications 1 à 8, caractérisé en ce que de la matière contenant du soufre, telle que du pyrite de fer, est ajoutée au matériau contenant de l'oxyde de fer.

10. Procédé selon la revendication 1 ou l'une quelconque des revendications 5 à 9, caractérisé en ce que est utilisé comme gaz de synthèse un ou plusieurs des gaz ci-après :
• un effluent gazeux LD
• un effluent gazeux EAF
• un gaz de gueulard provenant d'installations de hauts fourneaux
• un gaz de gueulard provenant d'installations corex
• du gaz de houille
• du gaz corex provenant du gazéificateur corex
• des gaz chimiques.

11. Procédé selon la revendication 1 ou l'une quelconque des revendications 5 à 9, caractérisé en ce que est utilisé comme gaz de synthèse du gaz naturel reformé.

12. Procédé selon l'une des revendications 1 à 11, caractérisé en ce qu'un rapport CO/CO₂ compris entre 1,5 et 2,0 est établi.
